# EUROPÄISCHE PATENTSCHRIFT

(11) **EP 1 636 506 B1**
(45) Veröffentlichungstag und Bekanntmachung des Hinweises auf die Patenterteilung: **20.12.2006**
(21) Anmeldenummer: 04740022.1
(22) Anmeldetag: 18.06.2004
(51) Int. Cl.: F16D 55/00, F16D 65/14, B60T 1/06

(54) **RADTRÄGEREINHEIT MIT INTEGRIERTER ZUSPANNEINHEIT**
WHEEL CARRIER UNIT COMPRISING AN INTEGRATED APPLICATION UNIT
UNITE SUPPORT DE ROUE A UNITE D'APPLICATION INTEGREE

(30) Priorität: 26.06.2003 DE 10328679
(43) Veröffentlichungstag der Anmeldung: 22.03.2006
(73) Patentinhaber: DaimlerChrysler AG, 70567 Stuttgart (DE)
(72) Erfinder: LESCH, Martin, 71336 Waiblingen (DE); MAUZ, Uwe, 73730 Esslingen (DE); QUINGER, Christian, 73614 Schorndorf (DE)
(86) Internationale Anmeldenummer: PCT/EP2004/006569
(87) Internationale Veröffentlichungsnummer: WO 2005/000648

(56) Entgegenhaltungen:
- EP-A- 0 944 509
- DE-A- 2 148 797

## Beschreibung

Die Erfindung-betrifft eine Radträgereinheit nach Anspruch 1.

Aus der EP 0 944 509 B1 ist ein Aufhängungsverbindungselement für ein Rad eines Kraftfahrzeugs bekannt, das den Zylinder der Kolben-Zylindereinheit einer Scheibenbremse enthält, der einstückig mit dem übrigen Teil des Verbindungselements ausgebildet ist.

Aus DE 2 148 797 ist eine weitere Radträgerreinheit, welche die Mermale des Oberbegriffs des Anspruchs 1 aufweist, bekannt.

Aufgabe der vorliegenden Erfindung ist es, eine kostengünstig herstellbare, leichte Radträgereinheit anzugeben, die wenig Bauraum erfordert.

Diese Aufgabe wird durch eine Radträgereinheit mit den Merkmalen des Anspruchs 1 gelöst.

Die erfindungsgemäße Radträgereinheit weist an ihrer radabgewandten Seite einen Bremszylinder auf. Dies hat den Vorteil, dass der Bremszylinder auf der Seite des Radträgers angeordnet ist, auf der auch die Bremsleitungen liegen. Die Bremsleitungen müssen nicht aufwendig durch die Radträgereinheit hindurch geführt werden. Gegenüber dem Rad ist der Bremszylinder durch die Radträgereinheit geschützt. Damit ist die hydraulische, pneumatische oder elektrische Seite der Bremsanlage durch die Radträgereinheit von der mechanischen Kraftübertragung der Radbremse getrennt. Das hat bei einer hydraulischen Bremsanlage den Vorteil, dass die Radbremse vor Verschmutzung durch den hydraulischen Teil, z.B. beim Wechsel der Bremsflüssigkeit, dem Entlüften der Bremsen, oder auftretenden Undichtigkeiten am hydraulischen System in Mitleidenschaft gezogen wird. Im Extremfall kann in einem solchen Fall Bremsflüssigkeit auf die Bremsbeläge geraten und zu einem teilweisen oder völligen Ausfall der Bremswirkung führen.

Auf der radzugewandten Seite der erfindungsgemäßen Radträgereinheit ist ein Gehäuse für eine als mechanische Kraftübertragungseinheit dienende Zuspanneinheit einer Bremse ausgeformt. Damit entfällt das Gehäuse als ein zusätzliches Bauteil. sowie die Bauteile zur Anbringung desselben an der Radträgereinheit. Der Montageaufwand und die damit verbundenen Kosten verringern sich. Das Gehäuse kann im selben Verfahren und im selben Herstellungsprozess wie die Radträgereinheit hergestellt werden, beispielsweise gegossen oder geschmiedet.

In einer Ausführungsform ist die Anbindung der Radträgereinheit über Achslenker an die Karosserie als gabelförmiger Tragarm ausgebildet, mit einem über Achslenker an die Karosserie angebundenen Grundtragarm, den zwei Seitentragarme mit dem Radträgergrundkörper verbinden. Vorteil dieser Ausführungsform ist die leichte Bauweise. Mit dem Radträgergrundkörper bilden die Seitentragarme eine stabile Dreiecksform, die trotz ihres niedrigen Gewichts sehr belastbar ist. Dies gilt insbesondere auch dann, wenn ein Werkstoff mit niederer Belastbarkeit eingesetzt wird. Der Raum zwischen den beiden Seitentragarmen kann zur platzsparenden Anbringung zusätzlicher Bauteile verwendet werden.

In einer bevorzugten Ausführungsform ist der Bremszylinder in der von dem gabelförmigen Achsschenkel gebildeten Aufnahme angeordnet. Auf diese Weise ist der Bremszylinder besonders platzsparend angebracht.

In einer besonders günstigen Ausgestaltung ist ein Teil der Radträgereinheit als ein Bremszylinderhalter ausgebildet. Dadurch wird die Anzahl der benötigten Bauteile weiter verringert. Durch die einteilige Ausführung von Radträgereinheit und Bremszylinderhalter kann der Bremszylinder besonders dicht an der Radträgereinheit angeordnet werden. Die Position des Bremszylinders an der Radträgereinheit und seine Lage relativ zur Zuspanneinheit ist durch den-Bremszylinderhalter exakt festlegbar. Insbesondere ist es möglich, Durchführungen durch die Radträgereinheit vorzusehen, die der Kraftübertragung zwischen Bremszylinder und Zuspanneinheit dienen. Damit ist eine vor Umwelteinflüssen geschützte und optimal ausgerichtete Kraftübertragungskette zwischen Bremszylinder und Zuspanneinheit sicherstellbar.

In einer Ausführungsform ist ein Teil der Radträgereinheit als ein Brückenhalter für eine Brücke einer Scheibenbremse ausgebildet. Der Halter ist einstückig mit der Radträgereinheit verbunden. Dabei werden zusätzliche Bauteile eingespart. Der Halter wird aus dem selben Material hergestellt, wie der gesamte Radträger. Die auf den Halter wirkenden Kräfte stützen sich über die Radträgereinheit und Achslenker an der Karosserie ab. Damit ist eine optimale Kraftübertragung der beim Bremsvorgang auf den Brückenhalter der Brücke wirkenden Kräfte auf die Radträgereinheit gewährleistet.

In einer besonders günstigen Ausbildung der Erfindung ist der Brückenhalter für die Brücke einer Scheibenbremse derart ausgebildet ist, dass die Befestigungselemente zur Befestigung der Brücke am Halter annähernd tangential zur Bremsscheibe ausgerichtet sind. Bei Betätigung der Scheibenbremse werden die Bremsbeläge gegen eine Bremsscheibe verspannt. Dadurch wird die Rotationsbewegung der Bremsscheibe verringert. Die Bremswirkung ist der Drehbewegung der Bremsscheibe entgegengesetzt. Tangential zur Bremsscheibe ausgerichtete Befestigungselemente sind also parallel zu dieser Bremswirkung der Scheibenbremse ausgerichtet. Die Bremswirkung der Scheibenbremse führt zu einer Stauchung oder einer Dehnung der Befestigungselemente. Senkrecht zur Bremswirkung angeordnete Befestigungselemente hingegen werden auf Scherung beansprucht. Übliche Befestigungselemente wie beispielsweise Schrauben sind geringer auf Scherung belastbar, als auf Stauchung oder Dehnung. Damit sind die Befestigungselemente bei gleicher Auslegung stärker belastbar, wenn sie tangential zur Bremsscheibe ausgerichtet sind.

Vorteilhaft ist es, die Radträgereinheit aus Guss zu bilden. Dabei liegt der Vorteil darin, dass bei hochfester Ausbildung der Geometrie nicht hochwertige Werkstoffe verwendet werden können. Es ist auf diese Weise möglich eine kostengünstige Radträgereinheit darzustellen, die hohen Belastungsanforderungen gerecht wird.

Weitere Merkmale und Merkmalskombinationen ergeben sich aus den weiteren Ansprüchen, der Beschreibung, sowie den Zeichnungen. Im Folgenden werden anhand der Zeichnungen Ausführungsformen der Erfindung dargestellt und in der nachfolgenden Beschreibung näher erläutert. Dabei zeigen:
- Fig. 1: eine Ausführungsform einer erfindungsgemäßen Radträgereinheit mit einem integrierten Gehäuse für eine Zuspanneinheit einer Bremse,
- Fig. 2: eine Explosionszeichnung einer erfindungsgemäßen Radträgereinheit mit der Bremse ohne Bremsscheibe,
- Fig. 3: ein betriebsbereiter Zusammenbau der Radträgereinheit mit der Bremse, einer Radnabe und einer Felge im Halbschnitt.

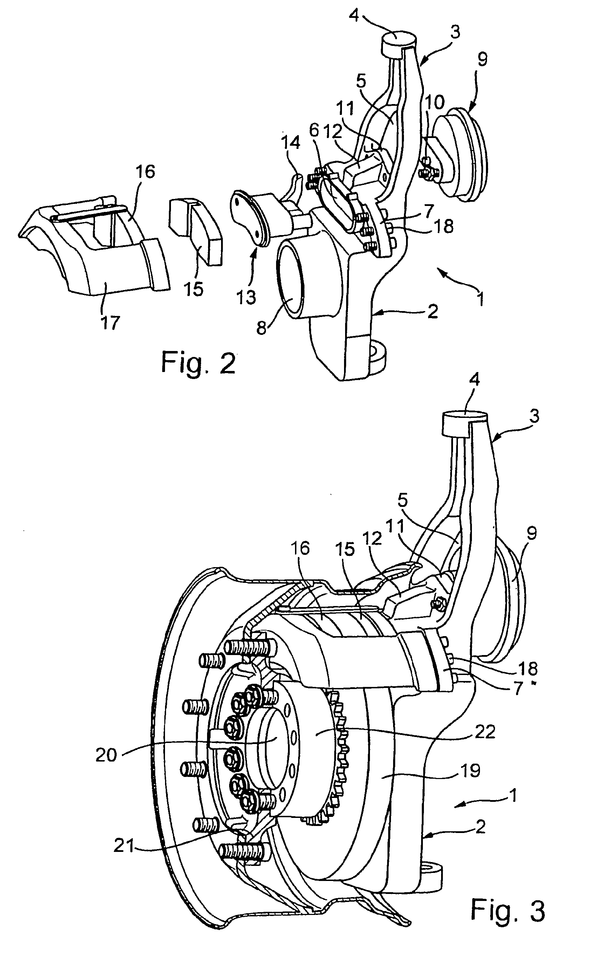

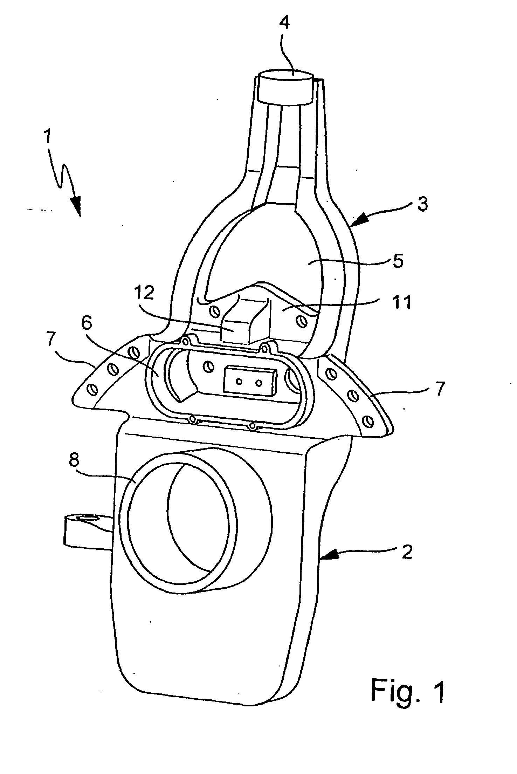

Fig. 1 zeigt die erfindungsgemäße Radträgereinheit 1. Die Radträgereinheit 1 weist einen Radträgergrundkörper 2 auf und einen davon ausgehenden Tragarm 3 der die Radträgereinheit 1 über Achslenker mit einer Karosserie eines Fahrzeugs verbindet.

Der Tragarm 3 ist gabelförmig ausgebildet, mit einem oben angeordneten Grundtragarm von dem nach unten zwei Seitentragarme abragen. Dabei ist der Grundtragarm annähernd vertikal und in Richtung der Seitentragarme etwas zur Fahrzeugmittellinie hin orientiert. Die Seitentragarme gehen vom Grundtragarm nach unten und in Richtung Fahrzeugrad hin aus.

Der Grundtragarm des gabelförmigen Tragarms 3 weist an seinem oberen Ende eine Befestigungseinrichtung 4 auf. In der in Fig. 1 gezeigten Ausführungsform verfügt die Befestigungseinrichtung 4 über eine nicht dargestellte Befestigungsbohrung. Mittels einer Schraube oder ähnlichem, wird der Tragarm 3 über die Befestigungseinrichtung 4 an dem Achslenker befestigt. Auf diese Weise wird die Radträgereinheit 1 an einer Karosserie eines Fahrzeugs angebunden.

Die beiden Seitentragarme des gabelförmigen Tragarms 3 münden in den Radträgergrundkörper 2.

Der Radträgergrundkörper 2 ist quer zur Fahrtrichtung und senkrecht zur Fahrbahn ausgerichtet. Gegenüber dem Tragarm 3 ist die Grundfläche des Radträgergrundkörpers 2 in Richtung Fahrzeugrad versetzt. Die Grundfläche des Radträgergrundkörpers 2 bildet eine annähernd rechteckige Grundplatte. Von dieser Grundplatte des Radträgergrundkörpers 2 ragt eine Radlageraufnahme 8 in Richtung Fahrzeugrad ab.

Der Radträgergrundkörper 2 weist weiterhin eine Aufnahme für eine Spurstange und Achslenker auf. In der in Fig. 1 dargestellten Ausführungsform ist einer dieser Halter an der in Fahrtrichtung weisenden Längsseite der Grundplatte etwa auf Höhe der Radnabe 20 angeordnet. In der in Fig. 2 und Fig. 3 dargestellten Ausführungsform ist der andere Halter unten an der dem Fahrzeugrad abgewandten Seite der Grundplatte angeordnet.

Im Bereich zwischen dem Tragarm 3 und dem Radträgergrundkörper 2 ist ein Gehäuse 6 für eine Zuspanneinheit 13 einer Radbremse ausgebildet. Aufgabe dieser Zuspanneinheit 13 ist es, das von einer Bremsanlage hydraulisch, pneumatisch, mechanisch oder elektronisch übermittelte Bremssignal in eine mechanische Betätigung einer an der Radträgereinheit 1 angeordneten Radbremse umzusetzen. Das Gehäuse 6 hat die Aufgabe die Zuspanneinheit 13 vor Verschmutzung und Beschädigung zu schützen. Die Zuspanneinheit 13 ist im Gehäuse 6 fest positioniert und stützt sich bei Betätigung gegen das Gehäuse 6 ab. Das Gehäuse 6 weist verschiedene Führungen, Bohrungen und Absätze auf, welche die Funktion der Zuspanneinheit 13 und ihren korrekten Sitz im Gehäuse 6 sicherstellen.

Die Innenseite des Gehäuses 6 weist an der Rückwand zwei runde Löcher auf. In der in Fig. 1 dargestellten Ausführungsform sind die beiden Löcher unterschiedlich groß. Das größere Loch dient der Aufnahme eines Verschleißsensors und das kleinere Loch dient der Zugänglichkeit zur Nachstellung der Zuspanneinheit 13. Zwischen den beiden Löchern ist auf der Gehäuseinnenseite eine gerade rechteckige Platte angeformt, die zwei Vertiefungen aufweist. Diese Platte dient als Gegenlager und Aufnahme der Zuspanneinheit 13. Die Ausrichtung der Zuspanneinheit 13 erfolgt über zwei Bolzen, die in den beiden Vertiefungen geführt und im Gehäuse 6 ausgerichtet werden.

In dem in Fig. 1 dargestellten Ausführungsbeispiel sind die beiden Seitenwände des Gehäuses 6 halbkreisförmig ausgebildet. Sie dienen als Führung für zwei Druckkolben eines Druckstücks. Nahe dem Rand des Gehäuses 6 weisen die halbkreisförmigen Seitenwände einen Absatz auf und der Radius ist vergrößert. Dieser Bereich dient der Aufnahme von an dem Druckstück angeordneten Zahnrädern und einer Druckplatte.

Die obere und die untere Wand des Gehäuses 6 sind gerade geformt. In jeder der beiden Wände sind an ihrem vorderen Rand zwei Gewindebohrungen eingebracht, die von der Vorderseite des Gehäuses 6 nach hinten in Richtung Rückwand geführt sind. In die Gewindebohrungen werden vier mit einer Deckplatte der Zuspanneinheit 13 verbundene Gewindebolzen eingebracht. Auf diese Weise wird die Zuspanneinheit 13 fest mit ihrem Gehäuse 6 verbunden.

Links und rechts vom Gehäuse 6 der Zuspanneinheit 13 ist ein Brückenhalter 7 für die Brücke 17 der Scheibenbremse angeordnet. Damit lässt sich die Brücke 17 der Scheibenbremse fest an der Radträgereinheit 1 befestigen. In der in Fig. 1 bis Fig. 3 dargestellten Ausführungsform weist der Brückenhalter 7 einen linken und einen rechten Teil auf, zwischen denen das Gehäuse 6 der Zuspanneinheit 13 angeordnet ist.

Die Lücke zwischen den beiden Seitentragarmen des Tragarms 3 bildet eine Aufnahme 5 für den Bremszylinder. Dadurch kann der Bremszylinder 9 dicht an der Radträgereinheit 1 angeordnet werden.

Zwischen den beiden Seitentragarmen des Tragarms 3 ist im Bereich des Radträgergrundkörpers 2 ein Bremszylinderhalter 11 angeordnet. Der Bremszylinderhalter 11 ist Teil der Radträgereinheit 1. In der in Fig. 1 dargestellten Ausführungsform verfügt der Bremszylinderhalter 11 über zwei Bohrungen zum Verschrauben des Bremszylinders 9 mit der Radträgereinheit 1. Eine weitere Bohrung führt in einen Hohlraum, der als Ausrückeraufnahme 12 für den Bremszylinder 9 dient.

Fig. 2 zeigt eine Explosionsdarstellung einer erfindungsgemäßen Radträgereinheit 1 mit einer Scheibenbremse ohne Bremsscheibe 19. Ganz rechts ist der Bremszylinder 9 dargestellt.

Der Bremszylinder 9 verfügt über zwei Gewindebolzen. Die Gewindebolzen passen in die Befestigungsbohrungen des Bremszylinderhalters 11.

Hinter einer mit der zugehörigen Befestigungsmutter dargestellten Befestigungsschraube ist der Ausrücker 10 des Bremszylinders 9 erkennbar. Der Ausrücker 10 passt in eine Ausrückeraufnahme 12, die Teil des Bremszylinderhalters 11 der Radträgereinheit 1 ist. Die Ausrückeraufnahme 12 ist als ein geschlossenes Gehäuse ausgebildet, dass außer der Öffnung für den Ausrücker 10 noch eine Verbindungsöffnung zum Gehäuse 6 der Zuspanneinheit 13 aufweist.

Links von der Radträgereinheit 1 ist eine mögliche Ausführungsform der Zuspanneinheit 13 dargestellt. Die Zuspanneinheit 13 weist einen Hebelarm 14 auf, der vom Gehäuse 6 der Zuspanneinheit 13 in die Ausrückeraufnahme 12 hineinragt und mit dem Ausrücker 10 in Wirkverbindung steht. Bei Betätigung des Bremszylinders 9 wird der Ausrücker 10 bewegt. Diese Bewegung wird vom Ausrücker 10 an den Hebelarm 14 der Zuspanneinheit 13 weitergegeben. Die Zuspanneinheit 13 überträgt diese Bewegung weiter auf die Bremsbeläge 15, 16.

Wird in der in Fig. 2 dargestellten Ausführungsform der Bremszylinder 9 betätigt, so drückt der Ausrücker 10 des Bremszylinders 9 auf den Hebelarm 14. Der Hebelarm 14 führt eine Drehbewegung um eine Welle aus, auf der er angeordnet ist. Die Drehbewegung des Hebelarms 14 wird über einen auf der Welle angeordneten Exzenter in eine translatorische Bewegung umgewandelt. Exzenter und-Welle bilden zusammen eine Exzenterwelle. Der Exzenter überträgt diese translatorische Bewegung auf ein Druckstück. Die translatorische Bewegung des Druckstücks wird über eine Verzahnung an zwei Druckkolben weitergeleitet. Durch die feste Verbindung der Druckkolben mit einer Druckplatte wird die Bewegung an die Bremsbeläge 15, 16 weitergegeben.

Links von der Zuspanneinheit 13 ist in Fig. 2 ein erster Bremsbelag 15 dargestellt, auf den die Zuspanneinheit 13 wirkt.

Links von dem ersten Bremsbelag 15 ist die Brücke der Scheibenbremse mit einem zweiten Bremsbelag 16 dargestellt. Die Radträgereinheit 1 ist in Fig. 2 an ihrem Brückenhalter 7 mit als Schrauben ausgeführten Befestigungselementen 18 zur Befestigung der Brücke 17 versehen. Damit wird die mit dem zweiten Bremsbelag 16 versehene Brücke 17 an dem Brückenhalter 7 der Radträgereinheit 1 befestigt.

Fig. 3 zeigt einen betriebsbereiten Zusammenbau der Radträgereinheit 1 mit der Scheibenbremse, einer Radnabe 20 und einer Felge im Halbschnitt. Dabei ist die Wirkungsweise der Scheibenbremse und ihre Integration in den von Felge und Radträgereinheit 1 vorgegebenen Bauraum erkennbar.

An der Radträgereinheit 1 ist in der Radnabenaufnahme 8 die Radnabe 20 angeordnet. Die Radnabe 20 ist mit dem Radflansch 21 verschraubt, an dem seinerseits die Felge angeschraubt ist. Zwischen Radnabe 20 und Radflansch 21 ist ein Zahnkranz 22 angeordnet, der über die Verschraubung des Radflanschs 21 fest mit Radflansch 21 und Radnabe 20 verbunden ist. Auf dem Zahnkranz 22 ist die Bremsscheibe 19 angeordnet und axial beweglich und radial formschlüssig mit dem Zahnkranz 22 verbunden. Zahnkranz 22 und Bremsscheibe 19 bilden zusammen eine Bremsscheibeneinheit mit axial beweglicher Bremsscheibe 19.

Wie in Fig. 2 erkennbar drückt die Zuspanneinheit 13 bei Betätigung des Bremszylinders 9 auf den ersten Bremsbelag 15 der Scheibenbremse. Der erste Bremsbelag 15 drückt auf die Bremsscheibe 19 und verschiebt diese axial in Richtung zweiter Bremsbelag 16. Die Bremsscheibe 19 drückt den zweiten Bremsbelag 16 gegen die Brücke 17, die fest mit der Radträgereinheit 1 verschraubt ist und deshalb nicht weiter ausweichen kann. Nunmehr liegen beide Bremsbeläge 15, 16 fest an der Bremsscheibe 19 an und bremsen die Drehbewegung der Scheibenbremse. Das Fahrzeug wird gebremst.

## Patentansprüche

1. Radträgereinheit (1) mit
- einem Radträgergrundkörper (2),
- einem den Radträgergrundkörper (2) mit einer Karosserie verbindenden Achsschenkel (3) und
- einem an der Radträgereinheit (1) angeordneten Bremszylinder (9), wobei
- an der radabgewandten Seite der Radträgereinheit (1) ein Bremszylinder (9) angeordnet ist, **dadurch gekennzeichnet,**
- **dass** auf der radzugewandten Seite der Radträgereinheit (1) ein Gehäuse (6) für eine als mechanische Kraftübertragungseinheit dienende Zuspanneinheit (13) einer Bremse ausgeformt ist.

2. Radträgereinheit (1) nach Anspruch 1,
**dadurch gekennzeichnet,**
**dass** die Anbindung an die Karosserie als gabelförmiger Tragarm (3) ausgebildet ist, mit einem an die Karosserie über Achslenker angebundenen Grundtragarm, den zwei Seitentragarmen mit dem Radträgergrundkörper (2) verbinden.

3. Radträgereinheit (1) nach Anspruch 2,
**dadurch gekennzeichnet,**
**dass** der Bremszylinder (9) in einer von dem gabelförmigen Tragarm (3) gebildeten Aufnahme (5) angeordnet ist.

4. Radträgereinheit (1) nach einem der Ansprüche 1 bis 3,
**dadurch gekennzeichnet,**
**dass** ein Teil der Radträgereinheit (1) als ein Bremszylinderhalter (11) ausgebildet ist.

5. Radträgereinheit (1) nach einem der Ansprüche 1 bis 4,
**dadurch gekennzeichnet,**
**dass** ein Teil der Radträgereinheit (1) als ein Brückenhalter (7) für eine Brücke (17) einer Scheibenbremse ausgebildet ist.

6. Radträgereinheit (1) nach Anspruch 5,
**dadurch gekennzeichnet,**
**dass** der Brückenhalter (7) für die Brücke (17) einer Scheibenbremse derart ausgebildet ist, dass die Befestigungselemente (18) zur Befestigung der Brücke (17) am Brückenhalter (7) annähernd tangential zur Bremsscheibe (19) ausgerichtet sind. als ein Bremszylinderhalter (11) ausgebildet ist.

7. Radträgereinheit (1) nach einem der Ansprüche 1 bis 6,
**dadurch gekennzeichnet,**
**dass** die Radträgereinheit (1) aus Guss gebildet ist.

## Claims

1. Wheel carrier unit (1) comprising
- a basic wheel carrier member (2),
- a steering knuckle (3) connecting the basic wheel carrier member (2) to a vehicle body and
- a brake cylinder (9) arranged on the wheel carrier unit (1),
- a brake cylinder (9) being arranged on the side of the wheel carrier unit (1) remote from the wheel, **characterized in that**
- a housing (6) for a brake application unit (13) serving as mechanical force transmission unit is formed out on the side of the wheel carrier unit (1) facing the wheel.

2. Wheel carrier unit (1) according to Claim 1, **characterized in that** the attachment to the vehicle body takes the form of a forked support arm (3), having a basic support arm which is attached by way of axle links to the vehicle body and which is connected by two lateral support arms to the basic wheel carrier member (2).

3. Wheel carrier unit (1) according to Claim 2, **characterized in that** the brake cylinder (9) is arranged in a mounting (5) formed by the forked support arm (3).

4. Wheel carrier unit (1) according to any one of Claims 1 to 3, **characterized in that** a part of the wheel carrier unit (1) is designed as a brake cylinder holder (11).

5. Wheel carrier unit (1) according to any one of Claims 1 to 4, **characterized in that** a part of the wheel carrier unit (1) is designed as a bridge holder (7) for a bridge (17) of a disc brake.

6. Wheel carrier unit (1) according to Claim 5, **characterized in that** the bridge holder (7) for the bridge (17) of a disc brake is formed in such a way that the fasteners (18) for fixing the bridge (17) to the bridge holder (7) are aligned approximately tangentially to the brake disc (19), as a brake cylinder holder (11).

7. Wheel carrier unit (1) according to any one of Claims 1 to 6, **characterized in that** the wheel carrier unit (1) is formed from a casting.

## Revendications

1. Unité support de roue (1) comprenant
- un corps de base de support de roue (2)
- une fusée d'essieu (3) reliant le corps de base de support de roue (2) à une carrosserie et
- un cylindre de frein (9) disposé sur l'unité support de roue (1),
- un cylindre de frein (9) étant disposé sur le côté, opposé à la roue, de l'unité support de roue (1),
**caractérisé en ce que**
- sur le côté, tourné vers la roue, de l'unité support de roue (1) est formé un boîtier (6) pour une unité d'application (13) servant d'unité mécanique de transmission de force, d'un frein.

2. Unité support de roue (1) selon la revendication 1,
**caractérisée en ce que**
le rattachement à la carrosserie est conçu comme un bras support (3) en forme de fourche, avec un bras support de base rattaché à la carrosserie par des bras oscillants d'essieu, que relient les deux bras supports latéraux au corps de base de support de roue (2).

3. Unité support de roue (1) selon la revendication 2,
**caractérisée en ce que**
le cylindre de frein (9) est disposé dans un logement (5) formé par le bras support (3) en forme de fourche.

4. Unité support de roue (1) selon l'une quelconque des revendications 1 à 3,
**caractérisée en ce que**
une partie de l'unité support de roue (1) est conçue comme un support de cylindre de frein (11).

5. Unité support de roue (1) selon l'une quelconque des revendications 1 à 4,
**caractérisée en ce que**
une partie de l'unité support de roue (1) est conçue comme un support de pont (7) pour un pont (17) d'un frein à disque.

6. Unité support de roue (1) selon la revendication 5,
**caractérisée en ce que**
le support de pont (7) est conçu pour le pont (17) d'un frein à disque de telle sorte que les éléments de fixation (18) pour la fixation du pont sur le support de pont (7) sont orientés à peu près tangentiellement au disque de frein (19) et qu'il est conçu comme un support de cylindre de frein.

7. Unité support de roue (1) selon l'une quelconque des revendications 1 à 6,
**caractérisée en ce que**
l'unité support de roue (1) est formée à base de fonte.
